# EUROPÄISCHE PATENTANMELDUNG

(11) **EP 0 933 751 A1**
(43) Veröffentlichungstag der Anmeldung: **04.08.1999**
(21) Anmeldenummer: 99101342.6
(22) Anmeldetag: 25.01.1999
(51) Int. Cl.: G09F 3/02, G07C 9/00

(54) **Vorrichtung zum Kennzeichen von Gepäckstücken**

(30) Priorität: 29.01.1998 DE 29801438 U; 26.06.1998 DE 29811364 U
(71) Anmelder: Maikranz, Friedhelm, 91161 Hilpoltstein (DE)
(72) Erfinder: Kanitz, Manfred, 35305 Grünberg (DE)
(74) Vertreter: Knefel, Cordula, Dipl.-Phys.

(57) **Zusammenfassung**

Die Erfindung betrifft eine Vorrichtung zum Kennzeichnen von Gepäckstücken, auf der Daten des Besitzers des Gepäckstückes, Daten des Reisebüros, Daten über das Reiseziel, Daten über die Reisezeit und/oder Daten über Flughäfen, Bahnhöfe, Häfen oder dergleichen angeordnet sind, wobei wenigstens die besitzerbezogenen Daten verschlüsselt auf der Vorrichtung angeordnet sind. Es kann ein elektronisch lesbares Medium vorgesehen sein, in dem die Daten abgespeichert sind. Die Verschlüsselung ist als eine mit einem Spezialcode codierte Verschlüsselung oder als Barcode (Strichcode) ausgebildet.

## Beschreibung

Die Erfindung betrifft eine Vorrichtung zum Kennzeichnen von Gepäckstücken, beispielsweise in Form von Kofferanhängern.

Zum Stand der Technik gehören Kofferanhänger, die beispielsweise beim Buchen von Reisen von Reisebüros ausgegeben werden. Auf diesen Kofferanhängern werden die besitzerbezogenen Daten, wie Name, Anschrift, Telefonnummer und dergleichen, vermerkt, damit das Gepäckstück, wenn es auf der Reise abhanden kommt, dem Besitzer zugeordnet und zugeleitet werden kann.

Diese zum Stand der Technik gehörenden Kofferanhänger haben den Nachteil, daß Dritte ungehindert die benutzerbezogenen Daten den Kofferanhängern entnehmen können. Hierdurch haben es Diebe und Einbrecher einfach, beispielsweise in der Abflughalle eines Flughafens herauszufinden, wer in der nächsten Zeit verreist ist und wo deshalb ungehindert eingebrochen werden kann.

Das der Erfindung zugrunde liegende technische Problem besteht darin, eine Vorrichtung zum Kennzeichnen von Gepäckstücken anzugeben, auf der besitzerbezogene Daten vermerkt sind, die aber nicht von Dritten in unbefugter Weise entschlüsselt oder ohne Hilfsmittel gelesen werden können.

Dieses technische Problem wird durch die Vorrichtungen mit den Merkmalen gemäß dem Anspruch 1 oder 15 gelöst.

Dadurch, daß wenigstens die besitzerbezogenen Daten ausschließlich in verschlüsselter Form auf der Vorrichtung, beispielsweise dem Kofferanhänger, angeordnet sind, können die besitzerbezogenen Daten von unbefugten Dritten nicht entschlüsselt und entziffert werden, so daß Diebe und Einbrecher nicht den Namen und die Anschrift des Besitzers für einen geplanten Einbruch in Erfahrung bringen können.

Vorteilhaft sind neben den besitzerbezogenen Daten auch weitere Daten, zum Beispiel das Reiseziel, die Reisezeit, Abflug- und Ankunftflughäfen, Bahnhöfe, Häfen oder dergleichen sowie Daten des Reisebüros in codierter Form auf dem Gepäckstück angeordnet.

Bei der Ausgabe der erfindungsgemäßen Vorrichtung, beispielsweise des Hofferanhängers oder des Aufklebers, der Plakette oder dergleichen, wird in dem Reisebüro die Vorrichtung mit den verschlüsselten Daten versehen. Hierzu ist die Vorrichtung erfindungsgemäß bedruckbar ausgebildet, so daß in dem Reisebüro die verschlüsselten Daten auf der Vorrichtung angeordnet werden können.

Die Daten werden mit Hilfe eines Computers und eines Computerprogrammes in dem Reisebüro verschlüsselt. Der Computer des Reisebüros kann aber auch mit einer Zentralstelle in Verbindung stehen, die als einzige Zugriff auf die Verschlüsselungen hat. Diese Zentralstelle kennt als einzige Stelle den Code.

Vorteilhaft werden die Codes häufig gewechselt. Es ist zum Beispiel denkbar, sieben- bis achttausend Codes ständig zur Verfügung zu haben, die alle dreißig Sekunden gewechselt werden, so daß eine Entschlüsselung für unbefugte Dritte fast unmöglich ist.

Kommt ein Gepäckstück abhanden, ist auf dem Kofferanhänger oder dergleichen vorteilhaft eine Information über die zentrale Organisation enthalten, beispielsweise in Form einer Internet-Adresse oder einer Telefonnummer.

Über die Internet-Adresse können berechtigte Personen, beispielsweise Mitarbeiter eines Reisebüros, einer Fluggesellschaft, beispielsweise der Abteilung 'Lost and Found' oder der Reiseveranstalter über den mit der zentralen Organisation in Verbindung stehenden Computer die verschlüsselten Daten eingeben. In der zentralen Organisation werden die Daten entschlüsselt. Die Daten können dann an die Fluggesellschaft oder den Reiseveranstalter oder an das Reisebüro weitergegeben werden. Erfindungsgemäß werden die Daten nicht weitergegeben, sondern Mitarbeiter der zentralen Organisation kümmern sich weiter um die Zuordnung des Gepäckstückes.

Vorteilhaft ist auf der erfindungsgemäßen Vorrichtung der voraussichtliche Zeitraum der Reise vermerkt. Befindet sich der Besitzer gemäß den Reisezeitangaben noch auf der Reise, werden nicht alle besitzerbezogenen Informationen von der zentralen Information herausgegeben.

Es wird beispielsweise nur der momentane Aufenthaltsort (Hotel, Ferienanlage oder dergleichen) herausgegeben, um eine Zustellung des Gepäckstückes zu ermöglichen. Beispielsweise wird die Information weitergegeben, daß sich der Besitzer des Hoffers mit dem Kennwort "Paulchen" in der Hotelanlage XY auf Zypern befindet.

In diesem Fall kann von der zentralen Organisation Kontakt mit dem Hotel oder dergleichen aufgenommen werden, in dem sich der Reisende befindet.

Ist der Reisende laut der Reisezeitangabe des Kofferanhängers von der Reise schon wieder zurückgekehrt, ist es möglich, sich mit dem Besitzer direkt und unmittelbar in Verbindung zu setzen. Die Heimatadresse kann dann bekanntgegeben werden.

Die erfindungsgemäße Vorrichtung weist vorteilhaft eine zusatzliche Nummer auf, die in verschlüsselter Form Angaben über das Reisebüro und die Reisezeit enthalten kann.

Gemäß einer bevorzugten Ausführungsform der Erfindung werden die besitzerbezogenen Daten bei der Entschlüsselung dem Reisebüro nicht zur Verfügung gestellt, sondern die zentrale Organisation kümmert sich direkt um die Zuordnung und Zustellung des Gepäckstückes. Vorteilhaft weist die erfindungsgemäße Vorrichtung ein nicht verschlüsseltes KennWort auf. Hierbei handelt es sich um ein von dem Besitzer vor Aushändigung der Kofferanhänger gewähltes Kennwort, so daß der Besitzer den Koffer anhand des Kennwortes, beispielsweise auf dem Förderband eines Flughafens, identifizieren kann, sofern mehrere ähnlich aussehende Koffer zur Auswahl stehen.

Erfindungsgemäß ist die Vorrichtung als Anhänger, Aufkleber, Plakette oder dergleichen ausgebildet, damit die erfindungsgemäße Vorrichtung für verschiedene Anwendungsformen benutzt werden kann. Als Anhänger kann die Vorrichtung direkt an einem Griff des Gepäckstückes befestigt werden. In Form eines Aufklebers wird sie an einem vorhandenen Kofferanhänger angeordnet. Ist die Vorrichtung als Plakette ausgebildet, läßt sie sich in entsprechend ausgebildete Kofferanhänger schieben. In Form der Plakette ist es auch möglich, die erfindungsgemäße Vorrichtung mittels einer Kette oder dergleichen an einem Griff des Gepäckstückes anzuordnen.

Die erfindungsgemäße Vorrichtung kann als einmalig verwendbarer Aufkleber oder einmalig verwendbarer Kofferanhänger aus Papier oder Karton ausgebildet sein. Es ist aber auch möglich, die Vorrichtung so auszubilden, daß eine mehrmalige Verwendung möglich ist. Die Vorrichtung ist in diesem Fall beispielsweise aus Kunststoff oder Metall ausgebildet.

Vorteilhaft weist die erfindungsgemäße Vorrichtung zumindest annähernd Scheckkartengröße auf. Diese Größe hat den Vorteil, daß die erfindungsgemäße Vorrichtung handlich ist.

Darüber hinaus weist die Vorrichtung erfindungsgemäß wenigstens ein Feld auf, in dem Anmerkungen oder dergleichen von dem Besitzer eingetragen werden können. Es kann sich hierbei um ein Feld handeln, auf dem Aufkleber angeordnet werden können, oder um ein Feld, welches mit einem Stift beschriftet werden kann, wobei die Schrift nach Beendigung der Reise auch wieder entfernbar ist, so daß die Vorrichtung mehrfach verwendet werden kann.

Die Vorrichtung besteht vorteilhaft aus Kunststoff, Metall, Pappe und/oder Papier. Es sind aber auch weitere Materialien, beispielsweise Holz oder dergleichen denkbar.

Erfindungsgemäß werden dem Besitzer vor der Reise mehrere Kofferanhänger ausgegeben. Hierbei ist es vorteilhaft, ein Blatt aus bedruckbarem Papier vorzusehen, auf dem beispielsweise fünf oder sechs Kofferanhänger mittels Perforationslinien ausgebildet sind. Die Kofferanhänger können Schlitze aufweisen, um ein Ende des Kofferanhängers durch ein anderes Ende stecken zu können für die Befestigung beispielsweise an einem Griff des Gepäckstückes.

Die Kofferanhänger sind mittels der Perforationslinien aus dem Blatt lösbar. Sie können auch, je nach Anordnung, voneinander getrennt werden.

Zusätzlich sind auf dem Blatt vorteilhaft Informationen allgemeiner Art vorgesehen, welche beim Drucken des Anhängers automatisch mit ausgedruckt werden. Bei den allgemeinen Informationen können Telefonnummern, wie Giftnotruf, Automobilclub, Konsulat des Reiselandes, telefonische Vorwahl aus dem Reiseland in das Heimatland, Sperrnummern für verschiedene Scheckkarten, Reiseveranstalter, Ansprechpartner vor Ort und dergleichen vermerkt sein. Beispielsweise kann auch das vom Besitzer vor Beginn der Reise gewählte Kennwort als Gedächtnisstütze noch einmal vermerkt sein.

Es ist möglich, die Plaketten in Kofferanhängern anzuordnen, wobei die Kofferanhänger einen Schlitz aufweisen, derart, daß nur das persönliche Kennwort des Besitzers in dem Schlitz nach Einschieben der Plakette lesbar ist.

Um die Sicherheit zu erhöhen, ist es darüber hinaus möglich, dem Reisenden für die Hin- und Rückreise verschiedene Kofferanhänger zu geben.

Gemäß der zweiten erfindungsgemäßen Vorrichtung sind die besitzerbezogenen Daten ausschließlich maschinenlesbar und/oder verschlüsselt in Form eines Barcodes (Strichcodes) auf der Vorrichtung, beispielsweise dem Kofferanhänger angeordnet. Dadurch können die besitzerbezogenen Daten nur mit einem Barcode-Leser entschlüsselt werden, so daß Dritte nicht unauffällig im Vorbeigehen Kenntnis von den benutzerbezogenen Daten erlangen können. Die benutzerbezogenen Daten können verschlüsselt, teilweise verschlüsselt oder nicht verschlüsselt auch auf einem Chip oder Magnetstreifen abgespeichert sein. Auch hierdurch wird erreicht, daß Dritte nur mit Hilfe eines entsprechenden Gerätes die Daten lesen können.

Erfindungsgemäß ist die Vorrichtung als Anhänger, Aufkleber, Plakette oder dergleichen ausgebildet.

Die erfindungsgemäße Vorrichtung kann als einmalig verwendbarer Aufkleber oder einmalig verwendbarer Kofferanhänger aus Papier oder Karton ausgebildet sein. Es ist aber auch möglich, die Vorrichtung so auszubilden, daß eine mehrmalige Verwendung möglich ist. Die Vorrichtung ist in diesem Fall beispielsweise aus Kunststoff oder Metall gebildet.

Die Vorrichtung weist vorteilhaft zusätzlich eine Nummer auf, die dem Besitzer des Gepäckstückes zugeordnet werden kann. Wird beispielsweise ein gefundenes Gepäckstück bei einem Fundbüro abgegeben, welches keine Barcode-Leser oder kein Lesegerät für Chips oder Magnetstreifen hat, kann über die Nummer der Besitzer ermittelt werden. Es ist möglich, die Zuordnung der Nummer zum Besitzer bei einem entsprechenden Servicedienst per Telefon, Telefax oder Internet abzufragen. Der Servicedienst gibt allerdings nur berechtigten Personen, die beispielsweise eine Zugangsberechtigung zu der entsprechenden Datenbank im Internet haben, Auskunft.

Vorteilhaft weist die erfindungsgemäße Vorrichtung zumindest annähernd Scheckkartengröße auf. Hierdurch hat die erfindungsgemäße Vorrichtung den Vorteil, daß sie in handelsübliche Lesegeräte paßt und die Informationen entschlüsselt werden können.

Darüber hinaus weist die Vorrichtung erfindungsgemäß wenigstens ein Feld auf, in dem ein Zielort, beispielsweise der Urlaubsort oder das Zielhotel eingetragen werden kann. Es kann sich hierbei um ein Feld handeln, auf dem Aufkleber angeordnet werden können, oder um ein Feld, welches mit einem Stift beschriftet werden kann, wobei die Schrift nach Beendigung der Reise wieder entfernbar ist, so daß die Vorrichtung mehrfach verwendet werden kann.

Die Vorrichtung besteht vorteilhaft aus Kunststoff, Metall, Pappe und/oder Papier. Es sind aber auch weitere Materialien, beispielsweise Holz oder dergleichen denkbar.

Die erfindungsgemäße Vorrichtung kann vom Reisebüro mit den maschinenlesbaren Daten, das heißt mit dem Barcode oder mit den Daten in dem Chip oder dem Magnetstreifen versehen werden. Es ist aber auch möglich, daß der Servicedienst die erfindungsgemäße Vorrichtung auf Anfrage herstellt und den Benutzern zuschickt.

Weitere Einzelheiten der Erfindung können den Unteransprüchen entnommen werden.

Auf der Zeichnung ist ein Ausführungsbeispiel der Erfindung dargestellt, und zwar zeigen:
- Fig. 1: eine erfindungsgemäße Vorrichtung in Ansicht;
- Fig. 2: ein Blatt mit mehreren erfindungsgemäßen Vorrichtungen in Ansicht;
- Fig. 3: ein geändertes Ausführungsbeispiel;
- Fig. 4: einen Kofferanhänger in Draufsicht;
- Fig. 5: einen Schnitt nach der Linie V-V der Fig. 4;
- Fig. 6: ein geändertes Ausführungsbeispiel;
- Fig. 7: ein geändertes Ausführungsbeispiel.

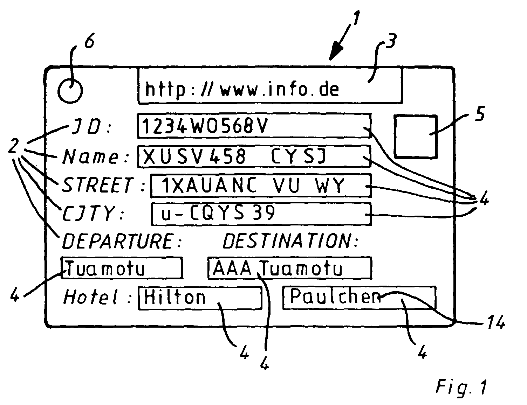

Fig. 1 zeigt einen Kofferanhänger (1) mit einem vorgegebenen Aufdruck (2). Der vorgegebene Aufdruck (2) enthält die Bezeichnungen "ID", "Name", "Street", "City", "Departure", "Destination", "Hotel" sowie in einem Feld (3) eine Internet-Adresse. Den Angaben in dem Aufdruck (2) sind Felder (4) zugeordnet, die die besitzerbezogenen Daten sowie weitere Daten in verschlüsselter Form enthalten. Die Daten in den Feldern (4) werden mit Ausgabe des Kofferanhängers (1) auf dem Kofferanhänger (1) angeordnet.

Diese Daten sind mit einem Spezialcode verschlüsselt und bestehen aus Buchstaben und Zahlen. Der Spezialcode wird ständig gewechselt und wird bei Ausgabe des Kofferanhängers von dem Reisebüro über einen Computer und ein Computerprogramm erstellt. Das Reisebüro erstellt direkt die verschlüsselten Daten. Die Verschlüsselung wird an die Zentralorganisation beispielsweise über die Internet-Adresse im Feld (3) weitergeleitet.

Der Kofferanhänger (1) weist einen Chip (5) auf, in dem die Daten der Felder (4) und/oder weitere Daten maschinenlesbar angeordnet sind.

Darüber hinaus weist der Kofferanhänger (1) eine Bohrung (6) auf. Durch die Bohrung (6) kann eine Kette oder ein Band gezogen werden, so daß der Kofferanhänger an einem Griff oder einer Schlaufe eines Gepäckstückes befestigbar ist.

Weiterhin ist auf dem Kofferanhänger (1) ein nicht verschlüsseltes Benutzerkennwort (14) vorgesehen.

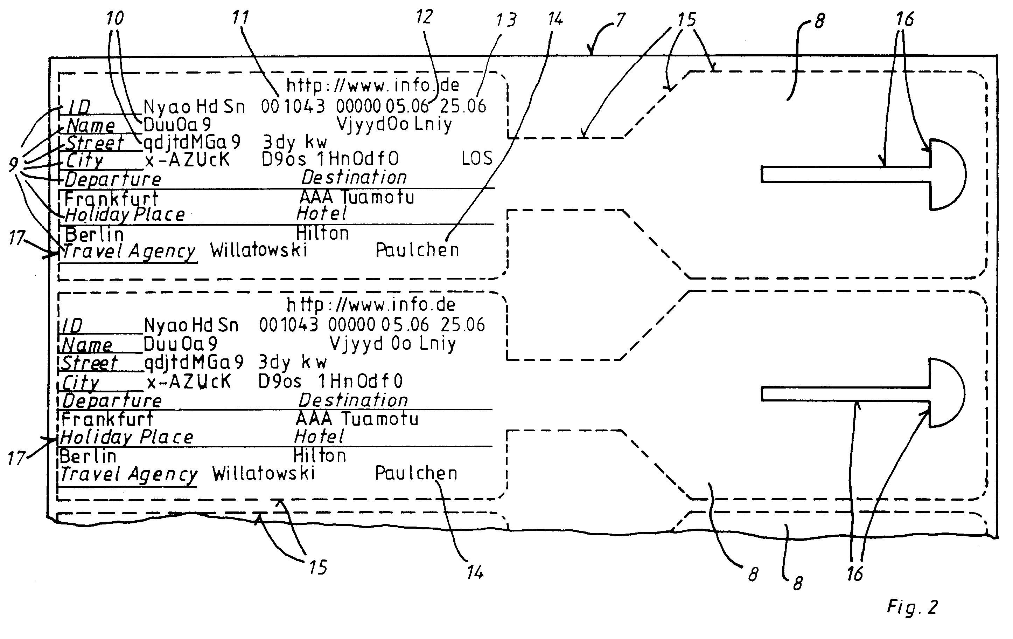

Fig. 2 zeigt ein Blatt (7) mit mehreren Kofferanhängern (8). Auf den Kofferanhängern (8) ist jeweils ein vorgegebener Aufdruck (9) vorgesehen. Darüber hinaus sind wiederum besitzerbezogene Daten (10) und weitere Daten (11) in verschlüsselter Form angegeben. Die verschlüsselte ID-Nummer (11) enthält in verschlüsselter Form Angaben des Reisebüros. Darüber hinaus sind Angaben (12, 13) über den Beginn und das Ende der Reise vorgesehen.

Auf den Anhängern (8) ist darüber hinaus ein Benutzerkennwort (14) vorgesehen, welches nicht verschlüsselt ist.

Die Anhänger (8) sind in dem Blatt (7) mit Perforationslinien (15) angeordnet, so daß die Anhänger (8) einzeln oder zusammen aus dem Blatt (7) abgetrennt werden können.

In den Anhängern (8) sind Schnittlinien (16) vorgesehen. Die von den Schnittlinien (16) begrenzten Felder können aus den Anhängern (8) herausgetrennt werden, so daß Enden (17) der Anhänger (8) durch die von den Schnittlinien (16) begrenzten Öffnungen gezogen werden können.

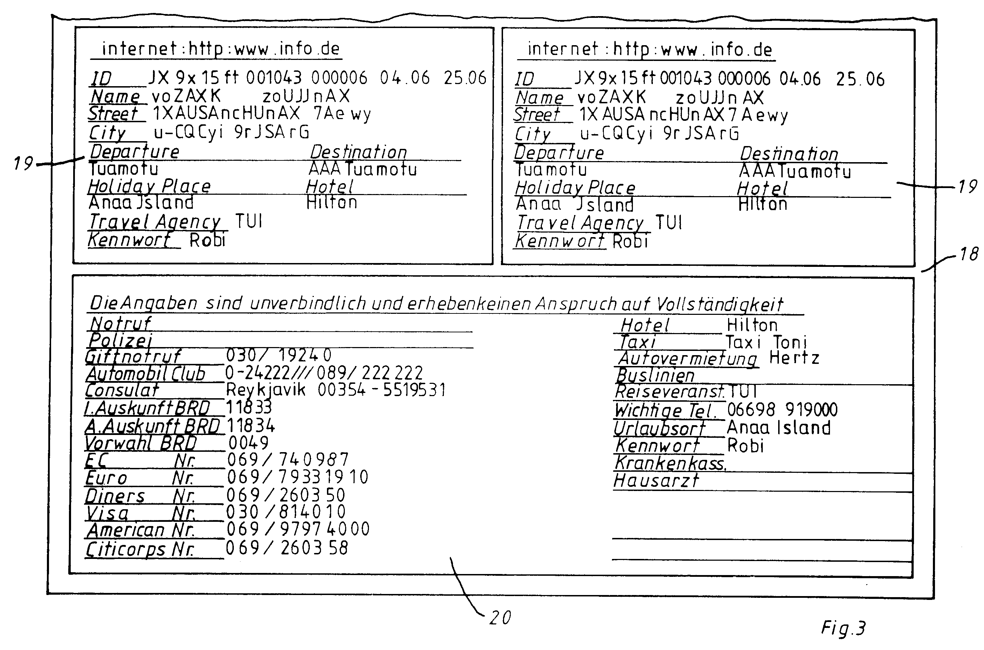

Fig. 3 zeigt ein Blatt (18) mit Kofferanhängern (19). Auf den Kofferanhängern (19) sind die Daten ähnlich wie auf den Kofferanhängern (8) der Fig. 2 angeordnet.

Das Blatt (18) weist zusätzlich im unteren Bereich in einem Feld (20) Angaben auf, die bei einer Reise wichtig sein können. Die Angaben in dem Feld (20) beinhalten zum Beispiel den Notruf, Polizei, Giftnotruf, Sperrnummern für Scheckkarten und dergleichen.

Diese allgemeinen Angaben werden automatisch mit ausgedruckt, wenn die Kofferanhänger (19) bedruckt werden.

Die Kofferanhänger (19) sind ebenfalls aus dem Blatt (18) lösbar.

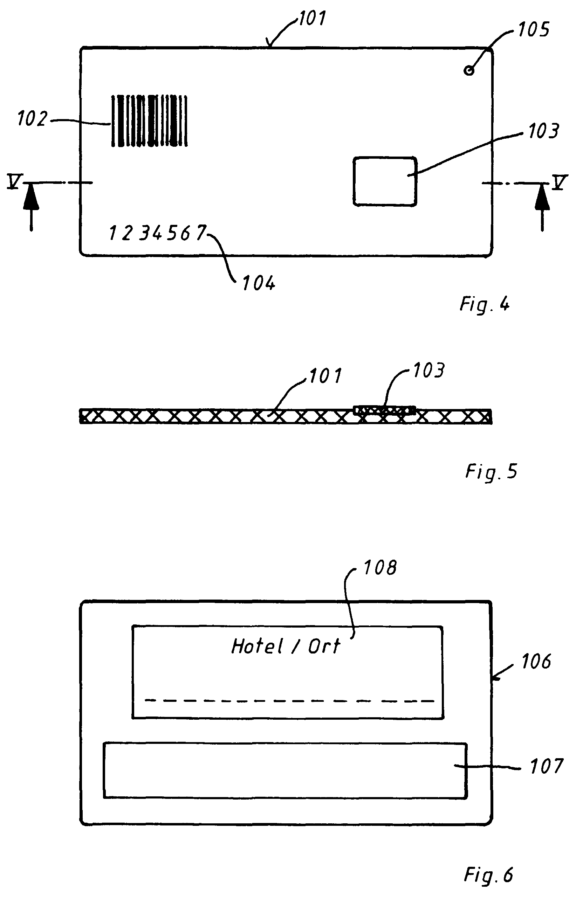

Fig. 4 zeigt einen Kofferanhänger (101), auf dem benutzerbezogene Daten, wie Name, Anschrift, Telefonnummer, in Form eines Barcodes (102) angeordnet sind. Der Kofferanhänger (101) weist darüber hinaus einen Chip (103) auf, auf dem weitere Daten oder die gleichen benutzerbezogenen Daten gespeichert sind. Darüber hinaus weist der Kofferanhänger (101) eine Nummer (104) auf, die dem Besitzer zugeordnet ist und für jeden Besitzer anders lautet.

Der Kofferanhänger (101) ist aus Kunststoff, Metall, Papier oder Pappe ausgebildet. Er weist eine durchgehende Ausnehmung (105) auf, mit der der Kofferanhänger an einem Gepäckstück befestigbar ist.

Gemäß Fig. 5 ist der Chip (103) zum Teil in dem Kofferanhänger (101) versenkt angeordnet.

Fig. 6 zeigt einen Kofferanhänger (106) mit einem Magnetstreifen (107), der die benutzerbezogenen Daten beinhaltet. Auf dem Kofferanhänger (106) ist ein Feld (108) vorgesehen, in dem das Zielhotel und/oder der Zielort vermerkt werden kann.

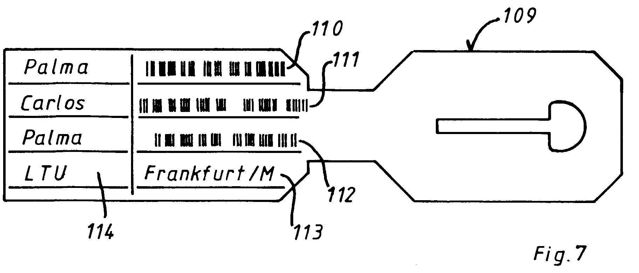

Fig. 7 zeigt einen Kofferanhänger (109), der aus Polyethylenfolie ausgebildet ist. Der Kofferanhänger (109) weist in Feldern (110, 111, 112) benutzerbezogene Daten, wie Name, Straße, Wohnort auf, die als Barcode auf dem Kofferanhänger (109) angeordnet sind.

Daten, die keinen Hinweis auf die genaue Herkunft des Besitzers geben, wie Abflughafen oder Reiseveranstalter, sind mit bloßem Auge lesbar auf dem Kofferanhänger (109) in Feldern (113, 114) angegeben.

Die Rückseite des Kofferanhängers (109) (nicht dargestellt) weist keinerlei Einteilung oder beschriftete Felder auf. Hier haben die Reisebüros die Möglichkeit, eigene Werbung anzuordnen.

### Bezugszahlen

- 1: Kofferanhänger
- 2: Aufdruck
- 3: Feld
- 4: Felder
- 5: Chip
- 6: Bohrung
- 7: Blatt
- 8: Anhänger
- 9: Aufdruck
- 10: besitzerbezogene Daten
- 11: Daten
- 12, 13: Angaben
- 14: Benutzerkennwort
- 15: Perforationslinien
- 16: Schnittlinien
- 17: Enden
- 18: Blatt
- 19: Anhänger
- 20: Feld
- 101: Kofferanhänger
- 102: Barcode
- 103: Chip
- 104: Nummer
- 105: Bohrung
- 106: Kofferanhänger
- 107: Magnetstreifen
- 108: Feld
- 109: Kofferanhänger
- 110, 111, 112: Felder
- 113, 114: Felder

## Patentansprüche

1. Vorrichtung zum Kennzeichnen von Gepäckstücken, auf der Daten des Besitzers des Gepäckstückes, Daten des Reisebüros, Daten über das Reiseziel, Daten über die Reisezeit und/oder Daten über Flughäfen, Bahnhöfe, Häfen oder dergleichen angeordnet sind,
**dadurch gekennzeichnet**,
daß wenigstens die besitzerbezogenen Daten verschlüsselt auf der Vorrichtung (1, 8, 19) angeordnet sind, und/oder daß wenigstens die besitzerbezogenen Daten in einem elektronisch lesbaren Medium (5), welches auf oder in der Vorrichtung (1, 8, 19) angeordnet ist, abgespeichert sind, wobei die Verschlüsselung als eine mit wenigstens einem Spezialcode codierte Verschlüsselung ausgebildet ist.

2. Vorrichtung nach Anspruch 1, dadurch gekennzeichnet, daß auf der Vorrichtung (8) wenigstens ein nicht verschlüsseltes Benutzerkennwort (14) vorgesehen ist.

3. Vorrichtung nach Anspruch 1, dadurch gekennzeichnet, daß der Spezialcode als ein ständig wechselnder Code ausgebildet ist.

4. Vorrichtung nach Anspruch 1, dadurch gekennzeichnet, daß die Vorrichtung (1, 8, 19) als Anhänger, Aufkleber oder Plakette ausgebildet ist.

5. Vorrichtung nach Anspruch 1, dadurch gekennzeichnet, daß das Medium als Chip (5) oder Magnetstreifen ausgebildet ist.

6. Vorrichtung nach Anspruch 1, dadurch gekennzeichnet, daß die Vorrichtung (1, 8, 19) als eine Vorrichtung zur einmaligen oder mehrmaligen Verwendung ausgebildet ist.

7. Vorrichtung nach Anspruch 1, dadurch gekennzeichnet, daß die Vorrichtung (1, 8, 19) eine dem Besitzer und/oder Reisebüro zuordbare Nummer aufweist.

8. Vorrichtung nach Anspruch 1, dadurch gekennzeichnet, daß die Vorrichtung (1, 19) wenigstens annähernd Scheckkartengröße aufweist.

9. Vorrichtung nach Anspruch 1, dadurch gekennzeichnet, daß die Vorrichtung (1, 8, 19) wenigstens ein Feld aufweist, auf dem weitere Daten anordbar oder eintragbar sind.

10. Vorrichtung nach Anspruch 1, dadurch gekennzeichnet, daß die Vorrichtung (1, 8, 19) aus Kunststoff, Metall, Pappe oder Papier besteht.

11. Vorrichtung nach Anspruch 4 und 8, dadurch gekennzeichnet, daß wenigstens eine Vorrichtung (8, 19) in einem Blatt (7, 18) aus Kunststoff, Pappe und/oder Papier angeordnet ist, und daß die Vorrichtung (8, 19) durch Perforationslinien (15) begrenzt ist, derart, daß die wenigstens eine Vorrichtung (8, 19) als von dem Blatt (7, 18) und/oder von anderen Vorrichtungen (8) lösbare Vorrichtung (8, 19) ausgebildet ist.

12. Vorrichtung nach Anspruch 1 oder 11, dadurch gekennzeichnet, daß die Vorrichtung (1, 8, 19) als bedruckbare Vorrichtung ausgebildet ist.

13. Vorrichtung nach Anspruch 11, dadurch gekennzeichnet, daß auf dem Blatt (18) allgemeine Informationen angeordnet sind.

14. Vorrichtung nach Anspruch 1, dadurch gekennzeichnet, daß die Vorrichtung (1, 8, 19) Informationen über die den Spezialcode besitzende Organisation oder Person aufweist.

15. Vorrichtung zum Kennzeichnen von Gepäckstücken, auf der Daten des Besitzers des Gepäckstückes angeordnet sind, **dadurch gekennzeichnet**, daß die Daten ausschließlich maschinenlesbar und/oder verschlüsselt in Form eines Barcodes (2) (Strichcodes) auf der Vorrichtung (1) angeordnet sind, und/oder daß die Daten in einem elektronisch lesbaren Medium (3, 7), welches auf oder in der Vorrichtung (1) angeordnet ist, abgespeichert sind.

16. Vorrichtung nach Anspruch 15, dadurch gekennzeichnet, daß das Medium als Chip (3) oder Magnetstreifen (7) ausgebildet ist.

17. Vorrichtung nach Anspruch 15, dadurch gekennzeichnet, daß die Vorrichtung (1) als Anhänger, Aufkleber oder Plakette ausgebildet ist.

18. Vorrichtung nach Anspruch 15, dadurch gekennzeichnet, daß die Vorrichtung (1) als eine Vorrichtung zur einmaligen oder mehrmaligen Verwendung ausgebildet ist.

19. Vorrichtung nach Anspruch 15, dadurch gekennzeichnet, daß die Vorrichtung (1) eine dem Besitzer zuordbare Nummer (4) aufweist.

20. Vorrichtung nach Anspruch 15, dadurch gekennzeichnet, daß die Vorrichtung (1) wenigstens annähernd Scheckkartengröße aufweist.

21. Vorrichtung nach Anspruch 15, dadurch gekennzeichnet, daß die Vorrichtung (1) wenigstens ein Feld (8) aufweist, auf dem weitere Daten anordbar oder eintragbar sind.

22. Vorrichtung nach Anspruch 15, dadurch gekennzeichnet, daß die Vorrichtung (1) aus Kunststoff, Metall, Pappe und/oder Papier besteht.
